(19) Europäisches Patentamt
European Patent Office
Office européen des brevets

(11) **EP 4 094 090 B1**

(12) **EUROPEAN PATENT SPECIFICATION**

(45) Date of publication and mention
of the grant of the patent:
**17.07.2024 Bulletin 2024/29**

(21) Application number: **20736761.6**

(22) Date of filing: **22.01.2020**

(51) International Patent Classification (IPC):
**G01S 7/41** *(2006.01)*    **G01S 13/90** *(2006.01)*

(52) Cooperative Patent Classification (CPC):
**G06N 3/08; G01S 7/417; G01S 13/9027;**
**G06N 3/045; G06N 3/048**

(86) International application number:
**PCT/IB2020/000467**

(87) International publication number:
**WO 2021/148837 (29.07.2021 Gazette 2021/30)**

(54) **METHOD AND SYSTEM FOR DETECTING OIL SLICKS IN RADAR IMAGES**

VERFAHREN UND SYSTEM ZUM DETEKTIEREN VON ÖLTEPPICHEN IN RADARBILDERN

PROCÉDÉ ET SYSTÈME DE DÉTECTION DE NAPPES D'HUILE DANS DES IMAGES RADAR

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**30.11.2022 Bulletin 2022/48**

(73) Proprietor: **TotalEnergies OneTech**
**92400 Courbevoie (FR)**

(72) Inventors:
• **XIE, Peigen**
**64018 Pau Cedex (FR)**
• **KILLISLY, Clément**
**64018 Pau Cedex (FR)**
• **CONCHE, Bruno**
**64018 Pau Cedex (FR)**
• **MIEGEBIELLE, Véronique**
**64018 Pau Cedex (FR)**
• **HUANG, Zhexuan**
**64018 Pau Cedex (FR)**

(74) Representative: **Plasseraud IP**
**66, rue de la Chaussée d'Antin**
**75440 Paris Cedex 09 (FR)**

(56) References cited:
**CN-A- 108 229 404    US-A1- 2019 384 303**

• **SUMAN SINGHA ET AL: "Satellite Oil Spill
Detection Using Artificial Neural Networks", IEEE
JOURNAL OF SELECTED TOPICS IN APPLIED
EARTH OBSERVATIONS AND REMOTE
SENSING, vol. 6, no. 6, 1 December 2013
(2013-12-01), USA, pages 2355 - 2363,
XP055737479, ISSN: 1939-1404, DOI:
10.1109/JSTARS.2013.2251864**
• **MIROSLAV KUBAT ET AL: "Machine learning for
the detection of oil spills in satellite radar
images", MACHINE LEARNING, vol. 30, no. 2/3, 1
January 1998 (1998-01-01), pages 195 - 215,
XP055058301, ISSN: 0885-6125, DOI:
10.1023/A:1007452223027**
• **Z HUANG ET AL: "ML P04 Deep Learning
Approach For Automatic Detection Of Oil Slicks",
MACHINE LEARNING, 30 November 2018
(2018-11-30), XP055737626, Retrieved from the
Internet
<URL:https://www.earthdoc.org/docserver/fullte
xt/2214-4609/2018/ML_P04.pdf?expires=160207
4577&id=id&accname=fromqa185&checksum=
A65671E5CEE0AB7DA8411667408E3F6E>
[retrieved on 20201007]**

- **CANTORNA DIEGO ET AL: "Oil spill segmentation in SAR images using convolutional neural networks. A comparative analysis with clustering and logistic regression algorithms", APPLIED SOFT COMPUTING, ELSEVIER, AMSTERDAM, NL, vol. 84, 26 August 2019 (2019-08-26), XP085865854, ISSN: 1568-4946, [retrieved on 20190826], DOI: 10.1016/J.ASOC.2019.105716**

**Description**

**TECHNICAL FIELD**

This disclosure relates to the field of radar images processing, and relates more particularly to the automatic detection of oil slicks in images of oceanic or maritime areas acquired by airborne of spaceborne radars.

**BACKGROUND ART**

Oil slicks can be found all over the surface of the ocean.

An "oil slick" corresponds to the surface expression of oil naturally seeped out of the seafloor (i.e. "oil seep") or spilled after man-made activities (i.e. "oil spill"). Oil spills correspond to accidental or illegal spills from platforms or ships i.e. discharge of water containing petroleum products.

Detection of oil slicks is mainly based on radar images such as Synthetic Aperture Radar (SAR) images, since oil slicks (i.e. oil seeps and oil spills) are represented by dark regions in SAR images. Indeed, oil slicks are such that only an extremely small portion of the incoming radar wave emitted by the radar is reflected back to said radar.

Currently, interpretation processes of SAR images are carried out by human interpreters who visually inspect and manually contour the potential oil slick regions in the SAR images.

Such an interpretation process requires experienced human interpreters and is usually time-consuming.

Another difficulty with the oil slick interpretation process is to distinguish oil slicks from other objects which can be confused with oil slicks, referred to as "look-alikes". In the context of oil slicks, look-alikes can include e.g. low-wind zones, rain cells, islands, meteoric phenomena, marine algae, etc. Indeed, such look-alikes produce also dark regions in SAR images, similar to oil slicks. Also, look-alikes appear much more frequently than oil slicks themselves, making oil slick detection a challenging task.

[Huang+2018] discloses a supervised deep learning approach to detect oil slicks, based on the use of a trainable convolutional neural network.

**SUMMARY**

The present disclosure aims at improving the situation. In particular, the present disclosure aims at overcoming at least some of the limitations of the prior art discussed above, by proposing a solution for detecting automatically oil slicks in target images of oceanic or maritime areas acquired by airborne or spaceborne radars.

Also, in some embodiments, the present disclosure aims at proposing a solution for reducing the false alarm rate induced by the presence of look-alikes in the target images.

According to a first aspect, the present disclosure relates to a computer implemented method for detecting an oil slick in a target image acquired by a spaceborne or airborne radar, wherein said method comprises:

- a phase of training a convolutional network using a set of training images, the set of training images comprising training images without oil slicks and training images with oil slicks,
- a phase of predicting the presence or absence of an oil slick on the target image by applying the convolutional network on said target image,

wherein the phase of training of the convolutional network uses a loss function which combines a weighted-cross-entropy loss function and a Jaccard loss function. Also, the convolutional network comprises an encoder, and using the convolutional network comprises applying an encoding step comprising successive convolutional layer steps and downsampling layer steps, wherein each convolutional layer step comprises at least one convolution step and at least one activation step which uses a leaky rectified linear unit. The leaky rectified linear unit applies an activation function $f(x)$ expressed as:

$$f(x) = \begin{cases} x & \text{if } x > 0 \\ \alpha x & \text{otherwise} \end{cases}$$

wherein $\alpha$ is a predetermined positive weighting factor, the value of which is lower than or equal to 0.001.

Hence, the method uses a supervised deep learning approach to detect oil slicks in target images, based on the use of a trainable convolutional neural network. Accordingly, oil slicks can be detected automatically in target images, without necessarily involving a human interpreter (except maybe for the initial validation of the accuracy of the trained convolutional network). The convolutional network is advantageously trained with a set of training images comprising training images known to comprise at least one oil slick and also training images known to comprise no oil slicks.

Also, the training phase advantageously uses a loss function combining a weighted-cross-entropy loss function and a Jaccard loss function. Indeed, experiments conducted by the inventors have shown that this specific combination of loss functions yielded better results for the detection of oil slicks.

It is emphasized that the expression "detection of oil slicks" means any decision on the presence or absence of oil slicks in a target image. Depending on the embodiment considered, "detection of oil slicks" can correspond to a classification problem (determining whether or not the target image comprises at least one oil slick), to a semantic segmentation problem (classifying each pixel of the target image as oil slick or non-oil slick, i.e. pixel-level classification), to an instance segmentation problem (classifying each pixel of the target as oil slick or non-oil slick while distinguishing different oil slicks), etc.

In specific embodiments, the oil slick detection method can further comprise one or more of the following features, considered either alone or in any technically possible combination.

In specific embodiments, at least a portion of the training images which do not comprise oil slicks are look-alike training images, a look-alike training image being a training image for which the values of the pixels satisfy one or more predetermined oil slick resemblance criteria.

Hence, the set of training images comprises also, among the training images which do not comprise an oil slick, training images for which an oil slick resemblance criterion is satisfied (look-alike training image). Accordingly, the risk of confusing, in the target image processed during the predicting phase, a look-alike with an oil slick is reduced by the fact that the convolutional network used is trained to distinguish look-alikes from oil slicks.

Also, it is possible to supply the convolutional network with context information data such as positions of ships and/or of oil infrastructures (e.g. oil rigs), wind direction maps, etc. This context information data can be used to improve the reliability of the detection of oil seeps and oil spills.

In specific embodiments, at least one predetermined oil slick resemblance criterion is satisfied by a training image if at least one of the following is true:

- number of dark pixels in the training image is above a predetermined first threshold value,
- number of dark pixels in the training image is below a predetermined second threshold value,
- variance of the values of the pixels in the training image is above a predetermined third threshold value,
- distance with the pixels of at least one training image comprising an oil slick is below a predetermined fourth threshold value, etc.

In specific embodiments, the convolutional network being a fully convolutional network comprising the encoder and a decoder, using the convolutional network comprises applying a decoding step comprising successive convolutional layer steps and upsampling layer steps, wherein each convolutional layer step comprises at least one convolution step and at least one activation step using an activation function, wherein the output of each upsampling layer step is concatenated with the output of the convolutional layer step of the encoding step having the same spatial resolution, the concatenated output being provided as input to the following convolutional layer step of the decoding step.

In specific embodiments, each activation step of a convolutional layer step of the decoder uses a leaky rectified linear unit.

In specific embodiments, the decoding step comprises a final convolutional layer step comprising a 1x1 convolution step followed by an activation step using a sigmoid function.

In specific embodiments, the leaky rectified linear unit of each activation step of a convolutional layer step of the decoder applies an activation function f'(x) expressed as:

$$f'(x) = \begin{cases} x & \text{if } x > 0 \\ \alpha' x & \text{otherwise} \end{cases}$$

wherein $\alpha'$ is a predetermined positive weighting factor, the value of which is lower than or equal to 0.001.

In specific embodiments, the loss function includes a L2 regularization.

In specific embodiments, the training images with oil slicks used during the training phase comprise training images with oil seeps and training images with oil spills, and the phase of predicting the presence or absence of an oil slick on the target image comprises, when the presence of an oil slick is detected, predicting whether the detected oil slick is an oil seep or an oil spill.

In specific embodiments, the loss function used during the phase of training uses a differentiable version of the Jaccard loss function, referred to as soft Jaccard loss function.

According to a second aspect, the present disclosure relates to a computer program product comprising instructions which, when executed by a processor, configure said processor to carry out an oil slick detection method according to any one of the embodiments of the present disclosure.

According to a third aspect, the present disclosure relates to a system for detecting an oil slick in a target image acquired by a spaceborne or an airborne radar, wherein said system comprises a processing circuit configured to carry out the phase of training and/or the phase of predicting of an oil slick detection method according to any one of the embodiments of the present disclosure.

## BRIEF DESCRIPTION OF DRAWINGS

The invention will be better understood upon reading the following description, given as an example that is in no way limiting, and made in reference to the figures which show:

- Figure 1: a flow chart illustrating the main phases of a method for detecting oil slicks in target images,
- Figure 2: a flow chart illustrating the main steps of an exemplary embodiment of an oil slick detection method,
- Figure 3: a schematic representation of an exemplary embodiment of a system for detecting oil slicks in target images.

In these figures, references identical from one figure to another designate identical or analogous elements. For reasons of clarity, the elements shown are not to scale, unless explicitly stated otherwise.

## DESCRIPTION OF EMBODIMENTS

As indicated above, the present disclosure relates inter alia to a method and system for the detection of an oil slick in a target image, using a supervised deep learning approach, and using more specifically a convolutional neural network trained with training images.

In the present disclosure, an "image" (either a training image or a target image) originates from an airborne or spaceborne radar. However, it should be noted that an image, before being processed for training or predicting, can undergo several pre-processing steps which are considered known to the skilled person, and which are not within the scope of the present disclosure. Such pre-processing steps can include, for instance, geotagging the image, cropping the image, parallax correction, etc.

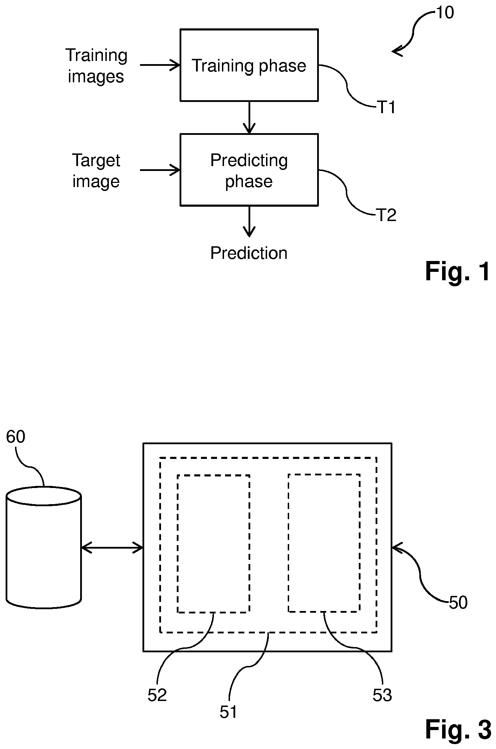

Figure 1 shows a method 10 for detecting an oil slick in a target image. As illustrated by figure 1, the oil slick detection method 10 comprises mainly two phases:

- a phase T1 of training a convolutional network by using a set of training images,
- a phase T2 of predicting the presence or absence of an oil slick in a target image by applying the trained convolutional network to said target image.

The set of training images used during the training phase T1 preferably comprises training images comprising an oil slick and training images comprising no oil slick.

For instance, the training images are images which have undergone an interpretation process by a human interpreter. In that case:

- a training image with an oil slick corresponds to a training image that has been classified by the human interpreter as comprising at least one oil slick, i.e. at least one oil seep or oil spill,
- a training image with no oil slick corresponds to a training image that has been classified by the human interpreter as comprising no oil slick.

In some embodiments, the training images with oil slicks used during the training phase T1 comprise training images with oil seeps and training images with oil spills. By using two such sets of training images with oil slicks, it is possible to train the convolutional network into detecting oil slicks and distinguishing oil spills from oil seeps, by considering at least three different classes during the training phase T1: oil seep, oil spill and non-oil slick. Once the convolutional network has been trained, the predicting phase T2, when the presence of an oil slick is detected in the target image, further comprises predicting whether the detected oil slick is an oil seep or an oil spill.

In the following description, we assume in a non-limitative manner that no distinction between oil seeps and oil spills is required.

Preferably, some or all of the training images comprising no oil slick are training images selected because they comprise look-alikes, i.e. they comprise features that, despite not representing an oil slick, might be confused by a non-expert with an oil slick.

In preferred embodiments, it is also possible to include in the training database additional context information data such as positions of ships and/or of oil infrastructures (e.g. oil rigs), wind direction maps, etc. This context information data can be used to improve the reliability of the detection of oil slicks, and to facilitate the prediction of whether a detected oil slick is an oil seep or an oil spill. For instance, the presence of an oil rig close to a detected oil slick can be used to predict that the detected oil slick is likely an oil spill.

Indeed, and as indicated above, an oil slick is usually present as a dark region in a radar image. However, some other objects, unrelated to oil slicks, can also appear in the radar images as dark regions (low-wind zones, rain cells, islands, meteoric phenomena, marine algae, etc.). A "dark region" is a region from which only an extremely small portion of the incoming radar wave emitted by the radar is reflected back to said radar. Correspondingly, in the present disclosure, a "dark pixel" is a pixel representing a portion of a dark region. Usually, a radar image is a greyscale image comprising a matrix of pixels. Each pixel value usually corresponds to a greyscale value representing the intensity of the radar wave reflected back to the radar from the direction of the zone represented by said pixel. Usually, a dark pixel will have a greyscale value close to "black". Assuming that the greyscale value is encoded on 256 values from "0" to "255", the value "0" corresponding to "black" while the value "255" corresponds to "white", then dark pixels can be considered to be pixels having a value below a predetermined threshold, for instance having a value below "70" or "50". The predetermined threshold is to be determined in a conventional manner according to the type of radar image used, and might be different e.g. for a radar image acquired by a first radar and for a radar image acquired by a second radar, different from the first radar. However, with negative images, a dark pixel can have a greyscale value close to "white". Assuming that the greyscale value is encoded on 256 values from "0" to "255", the value "0" corresponding to "black" while the value "255" corresponds to "white", then dark pixels can be considered to be pixels having a value above a predetermined threshold, for instance having a value above "175" or "205". In the following description, we assume in a non-limitative manner that positive images are used, such that dark pixels correspond to greyscale values close to "black".

Hence, some of the training images labeled as not comprising oil slicks are preferably chosen as training images exhibiting a resemblance with oil slicks. Such training images are referred to as "look-alike training images" in the following description. These look-alike training images correspond to training images for which the values of the pixels satisfy one or more predetermined oil slick resemblance criteria.

In practice, different types of oil slick resemblance criteria can be considered as long as they enable selecting training images exhibiting a resemblance with oil slicks. The choice of a specific oil slick resemblance criterion corresponds only to a specific embodiment of the present disclosure.

According to a first example, the oil slick resemblance criterion is satisfied when the number of dark pixels in a training image without oil slicks is above a predetermined first threshold. Indeed, since oil slicks appear in the training images as dark pixels, then a training image without oil slick which comprises a non-negligible number of dark pixels can be considered to comprise one or more look-alikes. The predetermined first threshold might depend on the actual size and spatial resolution of the training images, and is for instance equal to 100 for a 512x512 image. Also, the number of dark pixels representing an oil slick will usually represent a small portion of the total number of pixels. Hence, it might be interesting to consider also a predetermined second threshold, higher than the predetermined first threshold, representing a maximum number of dark pixels in the training image without oil slicks. In that case, the oil slick resemblance criterion is satisfied when the number of dark pixels in a training image without oil slicks is both above the predetermined first threshold and below the predetermined second threshold. The predetermined second threshold might depend on the actual size and spatial resolution of the training images, and is for instance equal to 500 for a 512x512 image. Preferably, only adjacent dark pixels are considered, such that the oil slick resemblance criterion can be considered to be satisfied if the training image comprises a number of adjacent dark pixels that is above said predetermined first threshold and, optionally, below said predetermined second threshold.

According to a second example, which can be combined with the first example, the oil slick resemblance criterion is satisfied when the variance of the values of the pixels in the training image with no oil slick is above a predetermined threshold value. By taking into account the variance of the values of the pixels, it is also possible to take into account, to some extent, the contrast of the dark pixels with respect to the other pixels.

According to a third example, which can be combined with the first and/or the second examples, the oil slick resemblance criterion is satisfied for a training image with no oil slicks when the distance between, on one hand, the values of the pixels of the training image with no oils slicks and, on the other hand, the values of the pixels of at least one training image comprising an oil slick is below a predetermined threshold value. In other words, the oil slick resemblance criterion is satisfied for a training image with no oil slicks if said training image with no oil slicks is close enough to at least one training image with at least one oil slick.

The evaluation of the oil slick resemblance criterion is preferably computer implemented, and allows therefore selecting automatically, without human intervention, look-alike training images among the training images classified as not comprising an oil slick.

In practice, images obtained from a radar, eventually after pre-processing, are very large, typically of more than 8000x8000 pixels. Such images, herein referred to as "original image", are difficult to process as such due to insufficient memory in conventional Graphics Processing Units (GPU), and are usually divided in sub-images, for instance sub-images of size 512x512 or 256x256. Hence, the target image to be processed can correspond to a subimage of a wider original target image, and the original target image is fully processed by processing all the sub-images extracted from said target original image. Such sub-images are usually selected such that they slightly overlap between them, in order to avoid missing an oil slick at the boundary of two adjacent sub-images. Similarly, the training images can correspond to sub-images of wider original training images manually classified by human interpreters. In that case, the training images comprising oil slicks are sub-images centered on at least one oil slick labeled in the original training image. The training images comprising no oil slick can correspond to sub-images extracted randomly from the original training images, and further satisfying the oil slick resemblance criterion in case of look-alike training images. It should be noted that the training images comprising no oil slicks can also be extracted from wider original training images comprising oil slicks, in which case they are extracted from areas of said wider original training images which do not comprise oil slicks. However, it is noted that the size of the target image can be different from the size of the training images.

A convolutional neural network comprises a set of trainable parameters that are optimized during the training phase T1. Indeed, the training phase T1 aims at processing each training image in order to obtain a prediction of the presence or absence of oil slicks in said training image. The prediction is compared to the actual label (i.e. class) provided by the human interpreter by using a function known as "loss function" (or "cost function") in the context of deep learning. The loss function is chosen so as to exhibit an extremum value (i.e. maximum or minimum value) when the prediction matches the actual label, and the training phase T1 aims at finding the set of parameters that optimizes (i.e. maximizes or minimizes) the value of the loss function.

The optimization can use any method known to the skilled person (e.g. gradient descent algorithm, etc.), and the choice of a specific optimization method corresponds only to a specific embodiment of the present disclosure.

Once the optimal set of parameters has been calculated, the predicting phase T2 consists mainly in applying the convolutional network, as defined by the optimal set of parameters, to the target image in order to predict whether or not said target image comprises an oil slick.

The training phase T1 uses a loss function combining a weighted-cross-entropy loss function and a Jaccard loss function. Indeed, experiments conducted by the inventors have shown that this specific combination of loss functions yielded better results for the detection of oil slicks, both in terms of convergence speed of the training phase T1 and in terms of accuracy of the predicting phase T2. Indeed, in most cases, the training images with oil slicks will have only a small portion of dark pixels corresponding to oil slicks, for instance less than 1%. However, the portion of dark pixels corresponding to oil slicks can also be higher in some cases. By using such a loss function combining a weighted-cross-entropy loss function and a Jaccard loss function, the training of the convolutional network can handle all cases.

It should be noted that the loss function used can consist in the combination of a weighted-cross-entropy loss function and a Jaccard loss function. However, it is also possible, in other embodiments, to combine the weighted-cross-entropy loss function and the Jaccard loss function with other terms. For instance, the loss function used can also include a regularization term to avoid overfitting, such as a L2 regularization term.

We provide below a detailed description of an exemplary embodiment. In this exemplary embodiment, we consider, by way of example and in no way limiting, that the convolutional network is a fully convolutional network. In that context, the detection of oil slicks aims at determining, pixel-wise, whether or not a pixel represents an oil slick (semantic segmentation problem).

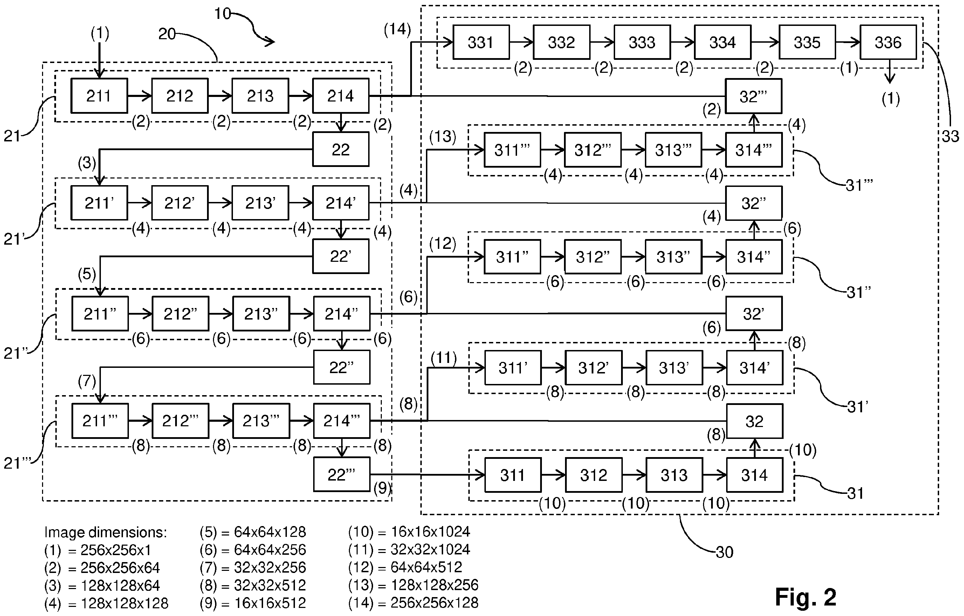

Figure 2 represents the mains steps of the oil detection method 10, when using the fully convolutional network. As discussed above, these steps are executed both during the training phase T1 (on the training images for finding the optimal set of parameters in the sense of the loss function) and during the predicting phase T2 (using the optimal set of parameters).

The fully convolutional network comprises an encoder and a decoder:

- the encoder (also known as "contracting path") successively downsamples the input image (i.e. training image during the training phase T1 or target image during the predicting phase T2),
- the decoder (also known as "contracting path") successively upsamples back to the original spatial resolution the image received from the encoder.

In figure 2, it is assumed, in a non-limiting manner, that the input image has a size of 256x256. It is also assumed that the input image is only a greyscale image in which each pixel is associated to a single greyscale value. In the context of convolutional networks, such an input image is considered to have the dimensions 256x256x1. In general, the notation $N_R \times N_C \times N_D$ is used in the following description, wherein:

- $N_R \times N_C$ corresponds to the size of the image, $N_R$ being the number of rows of pixels and Nc being the number of columns of pixels,
- No corresponds to the number of channels of the image, also known as "depth" of the image.

As illustrated by figure 2, the encoder applies an encoding step 20 which comprises successive convolutional layer steps 21, 21', 21", 21'" and downsampling layer steps 22, 22', 22", 22'". In the non-limitative example illustrated by figure 2, the encoder comprises four (4) layers, which means that the input image is downsampled four times, and each downsampling downsizes the size of the image by a factor two (2). For instance, each downsampling layer step 22, 22', 22", 22'" preferably applies a max-pooling function, for instance with a 2x2 window and a stride equal to two (2). However, it is also possible to use other downsampling functions in other embodiments.

Generally speaking, each convolutional layer step 21, 21', 21", 21'" of the encoding step 20 comprises at least one convolution step and one activation step which applies an activation function to the values of the image. In the non-limitative example of figure 2, each convolutional layer step 21, 21', 21", 21'" of the encoding step 20 comprises two convolution steps 211, 213, 211', 213', 211", 213", 211'", 213'" followed by two respective activation steps 212, 214, 212', 214', 212", 214", 212'", 214'". In the non-limitative example illustrated by figure 2, the filters used (or "kernels") are 3x3 filters, and the number of filters is increased at each layer, for instance doubled at each layer. In the non-limitative example illustrated by figure 2, the number of 3x3 filters is initially equal to 64 for each convolution step 211, 213, and is doubled from one layer to the sequel:

- the number of 3x3 filters is equal to 128 for each convolution step 211', 213',
- the number of 3x3 filters is equal to 256 for each convolution step 211", 213",
- the number of 3x3 filters is equal to 512 for each convolution step 211'", 213'".

For conciseness and clarity purposes, it is assumed in figure 2 that the filtering does not reduce the size of the image, e.g. filtering with a 3x3 filter a 256x256 image gives a 256x256 filtered image. However, it is also possible, in other embodiments, that the size of the image is slightly reduced when applying the filter, e.g. filtering with a 3x3 filter a 256x256 image could typically give a 254x254 filtered image, and so on.

Each activation step 212, 214, 212', 214', 212", 214", 212'", 214'" uses a leaky rectified linear unit (or "LReLU"). Indeed, experiments conducted by the inventors have shown that this specific activation function yielded better results for the detection of oil slicks, in particular with respect to the conventional rectified linear unit, both in terms of convergence speed of the training phase T1 and in terms of accuracy of the predicting phase T2. This is due to the fact that, in the context of oil slick detection, a non-negligible part of the information is contained in negative values and this part of information is not lost when using a leaky rectified linear unit compared with using a rectified linear unit. Typically, a leaky rectified linear unit applies an activation function $f(x)$ expressed as:

[Math. 1]

$$f(x) = \begin{cases} x & \text{if } x > 0 \\ \alpha x & \text{otherwise} \end{cases}$$

expression which $\alpha$ is a predetermined positive weighting factor.

In the context of oil slick detection, experiments conducted by the inventors have shown that using a weighting factor $\alpha$ having a value lower than or equal to 0.001 yields better results. For instance, the weighting factor $\alpha$ can be selected in the interval [0.0001, 0.0005].

As illustrated by figure 2, the decoder applies a decoding step 30 which comprises successive convolutional layer steps 31, 31', 31", 31'" and upsampling layer steps 32, 32', 32", 32'". In the non-limitative example illustrated by figure 2, the decoder comprises four (4) layers, which means that the image received from the encoder is upsampled four times, and each upsampling upsizes the size of the image by a factor two (2). For instance, each upsampling layer step 32, 32', 32", 32'" preferably applies a transpose convolution, such that the transpose convolution filters are made-up with trainable parameters. However, it is also possible to use other upsampling functions in other embodiments.

Generally speaking, each convolutional layer step 31, 31', 31", 31'" of the decoding step 30 comprises at least one convolution step and one activation step which applies an activation function to the values of the image. In the non-limitative example of figure 2, each convolutional layer step 31, 31', 31", 31'" of the decoding step 30 comprises two convolution steps 311, 313, 311', 313', 311", 313", 311'", 313'" followed by two respective activation steps 312, 314, 312', 314', 312", 314", 312'", 314'". In the non-limitative example illustrated by figure 2, the filters used (or "kernels") are also 3x3 filters, and the number of filters is decreased at each layer, for instance reduced by a factor two (2) at each layer. In the non-limitative example illustrated by figure 2, the number of 3x3 filters is initially equal to 1024 for each convolution step 311, 313, and is reduced by a factor two (2) from one layer to the sequel:

- the number of 3x3 filters is equal to 512 for each convolution step 311', 313',
- the number of 3x3 filters is equal to 256 for each convolution step 311", 313",
- the number of 3x3 filters is equal to 128 for each convolution step 311'", 313'".

Generally speaking, any activation function known to the skilled person can be used during the activation steps 312, 314, 312', 314', 312", 314", 312''', 314'''.

However, and as discussed above for the encoder, each activation step 312, 314, 312', 314', 312", 314", 312''', 314''' preferably uses a leaky rectified linear unit. The predetermined positive weighting factor $\alpha'$ of the leaky rectified linear unit has a value that is preferably lower than or equal to 0.001, for instance selected in the interval [0.0001, 0.0005].

Also, as illustrated in figure 2, the output of each upsampling layer step 32, 32', 32", 32''' is concatenated with the output of the convolutional layer step 21, 21', 21", 21''' of the encoding step 20 having the same spatial resolution. The "spatial resolution" corresponds to the dimensions of the area represented on the Earth's surface by one pixel. For instance:

- the 32x32(x512) image at the output of the convolutional layer step 21''' is concatenated with the 32x32(x512) image at the output of the upsampling layer step 32, to produce a 32x32(x1024) image,
- the 64x64(x256) image at the output of the convolutional layer step 21" is concatenated with the 64x64(x256) image at the output of the upsampling layer step 32', to produce a 64x64(x512) image,
- the 128x128(x128) image at the output of the convolutional layer step 21' is concatenated with the 128x128(x128) image at the output of the upsampling layer step 32", to produce a 128x128(x256) image,
- the 256x256(x64) image at the output of the convolutional layer step 21 is concatenated with the 256x256(x64) image at the output of the upsampling layer step 32''', to produce a 256x256(x128) image.

In the non-limitative example illustrated by figure 2, the decoding step 30 further comprises a final convolutional layer step 33. In the exemplary embodiment depicted, the final convolutional layer step 33 comprises two (2) convolution steps 331, 333, followed by two (2) respective activation steps 332, 334, which preferably use leaky rectified linear units. In this exemplary embodiment, each convolution step 331, 333 uses a number of 3x3 filters that is equal to 64, to produce a 256x256x64 image.

In order to produce the final image, the final convolutional layer step 33 comprises a 1x1 convolution step 335. For instance, the number of 1x1 filters used can be equal to the number of classes considered. In the present case, the number of classes is two (2), respectively oil slick or non-oil slick. Hence, it is possible to use two (2) 1x1 filters to produce one 256x256 image per class, i.e. to produce a 256x256x2 image. In such a case, the 1x1 convolutional step 335 is followed by an activation step that can use for instance a softmax activation function.

In preferred embodiments, and as illustrated by figure 2, only one 1x1 filter is used to produce a 256x256x1 image which, for each pixel, a value that can be representative of the probability that said pixel in the input image represents an oil slick. The 1x1 convolutional step 335 is followed by an activation step 336 that can use for instance a sigmoid activation function.

As indicated above, the training phase T1 uses a loss function which combines a weighted-cross-entropy loss function and a Jaccard loss function.

In practice, in a training image comprising an oil slick, the number of non-oil slick pixels is significantly higher than the number of oil slick pixels. In other words, the classes (oil slick or non-oil slick) are heavily imbalanced. In the present disclosure, the weighted-cross-entropy loss function is used, instead of a cross-entropy loss function, in order to prevent from focusing too much on non-oil slick pixels. Hence the goal of the weighting in the weighted-cross-entropy loss function is to reduce the contribution of the non-oil slick pixels and/or to increase the contribution of oil slick pixels with respect to the cross-entropy loss function.

Typically, the (non-weighted) cross-entropy loss function CE can be expressed as follows:

[Math. 2]

$$\mathrm{CE}(y,\hat{y}) = -\sum_{k=1}^{N_P}(1-y_k)\log(1-\widehat{y_k}) - \sum_{k=1}^{N_P} y_k\log\left(\widehat{y_k}\right)$$

expression in which:

- y corresponds to the image comprising the $N_P$ actual respective labels $y_k$ (i.e. oil slick or non-oil slick) of the $N_P$ pixels of the training image, as set by the human interpreter,
- $\hat{y}$ corresponds to the prediction comprising the $N_P$ predicted respective labels $\widehat{y_k}$ of the $N_P$ pixels of the training image, as computed by the convolutional network under training.

For instance, the weighted-cross-entropy loss function WCE used during the training phase T1 can be expressed as follows:

[Math. 3]

$$\text{WCE}(y,\hat{y}) = -\frac{1}{S_{\text{NO}}}\sum_{k=1}^{N_P}(1-y_k)\log(1-\widehat{y_k}) - \frac{1}{S_O}\sum_{k=1}^{N_P}y_k\log(\widehat{y_k})$$

expression in which:

- $S_{\text{NO}}$ corresponds to the actual number of non-oil slick pixels in the training image, as set by the human interpreter,
- $S_O$ corresponds to the actual number of oil slick pixels in the training image, as set by the human interpreter.

It should be noted that it is also possible, in other embodiments, to use other weighting factors in the weighted-cross-entropy loss function as long as the weighting factors used enable to increase the contribution of the oil slick pixels and/or to reduce the contribution of the non-oil slick pixels with respect to the (non-weighted) cross-entropy loss function.

The Jaccard loss function (or Jaccard index) is also known as intersection over union and represents the similarity between two sets A and B. The Jaccard loss function can be expressed as follows:

[Math. 4]

$$J(A,B) = \frac{|A \cap B|}{|A \cup B|}$$

Such a Jaccard loss function is not differentiable, which makes it complex to use as such in a training process. Advantageously, the loss function used during the training phase includes a differentiable version of the Jaccard loss function which can be used e.g. in a gradient descent algorithm, and which can for instance be expressed as follows:

[Math. 5]

$$J(y,\hat{y}) = \frac{\sum_{k=1}^{N_P} y_k\widehat{y_k}}{\sum_{k=1}^{N_P}(y_k + \widehat{y_k} - y_k\widehat{y_k})}$$

This differentiable version of the Jaccard loss function is also referred to as "soft Jaccard" loss function in the literature.

In an exemplary embodiment, the loss function *LF* combining the weighted-cross-entropy loss function *WCE* and the Jaccard loss function *J* can be expressed as:

[Math. 6]

$$LF(y,\hat{y}) = \text{WCE}(y,\hat{y}) - \log(J(y,\hat{y}))$$

It should be noted that it is also possible, in other embodiments, to combine differently the weighted-cross-entropy loss function *WCE* and the Jaccard loss function *J*. For instance, it is possible to introduce in expression [Math. 6] above weighting factors β and γ having the same polarity (i.e. either both positive weighting factors or, alternatively, both negative weighting factors). In such a case, the loss function *LF* can for instance be expressed as follows:

[Math. 7]

$$LF(y,\hat{y}) = \beta\text{WCE}(y,\hat{y}) - \gamma\log(J(y,\hat{y}))$$

Of course, the weighted-cross-entropy loss function *WCE* and the Jaccard loss function *J* need to be combined in a coherent manner. In other words, the combination is such that, when considering independently the respective contributions of the weighted-cross-entropy loss function *WCE* and the Jaccard loss function *J*, both contributions are optimized in the same direction, i.e. either both maximized in case optimization means maximization, or both minimized in case optimization means minimization.

Finally, and as indicated above, the loss function *LF* used during the training phase T1 can also include other terms. For instance, the loss function *LF* used during the training phase T1 can also include a regularization term to avoid overfitting, such as a L2 regularization term.

Figure 3 represents an exemplary embodiment of a system 50 for detecting an oil slick in a target image. As can be seen in figure 3, said system 50 comprises a processing circuit 51 configured to carry out all or part of the steps of the oil slick detection method 10.

For example, the processing circuit 51 comprises one or more processors and storage means (magnetic hard disk, solid-state disk, optical disk, etc.) in which a computer program product is stored, in the form of a set of program-code instructions to be executed in order to implement all or part of the steps of the oil slick detection method 10. Alternatively, or in combination thereof, the processing circuit 51 can comprise one or more programmable logic circuits (FPGA, PLD, etc.), and/or one or more specialized integrated circuits (ASIC), and/or a set of discrete electronic components, etc., adapted for implementing all or part of the steps of the oil slick detection method 10.

In other words, the processing circuit 51 corresponds to a set of means configured by software (specific computer program product) and/or by hardware (processor, FPGA, PLD, ASIC, discrete electronic components, radiofrequency circuit, etc.) to implement all or part of the steps of the oil slick detection method 10.

In the exemplary embodiment depicted in figure 3, the system 50 can obtain from a database 60 the training images and the target image to be processed. Also, the processing circuit 51 comprises a training unit 52 which implements the training phase T1 in order to train the trainable parameters of the convolutional network on the basis of the training images. The training unit 52 can also implement the selection of look-alike training images, i.e. the selection of training images with no oil slicks which satisfy the oil slick resemblance criterion. The processing circuit 51 further comprises a predicting unit 53 which implements the predicting phase T2 by applying the trained convolutional network on the target image.

In figure 3, the database 60 is remote from the system 50. However, it is also possible, in other embodiments, to have the database 60 integrated within the system 50. "System" means one or several pieces of equipment that are connected to each other, and can relate for instance to one or several GPUs, to a cloud computing system, etc.

It is emphasized that the present invention is not limited to the above exemplary embodiments. Variants of the above exemplary embodiments are also within the scope of the present invention.

For example, the disclosure above has been provided while considering mainly a fully convolutional network used for the segmentation of target images. However, the invention can also be used with any type of convolutional network. For instance, the invention can be used for classification instead of segmentation, with a convolutional network comprising an encoder, for instance as described above, followed by one or more fully connected layers instead of a decoder. The training of such a convolutional network can also be performed as described above, and can also use a loss function combining a weighted-cross-entropy loss function and a Jaccard loss function.

Also, the disclosure above has been provided while considering mainly the prediction of the presence of oil slicks in target images, without distinction of oil seeps and oil spills. As indicated above, in some embodiments, the convolutional network can also be trained to distinguish oil seeps and oil spills. In that case, during the prediction phase T2, the convolutional network can for instance classify the target image, or each pixel of the target image, as either oil seep or oil spill or non-oil slick.

Also, the disclosure above has been provided while considering mainly the use, in the set of training images, of look-alike training images. However, the invention can also be used without considering look-alike training images.

Also, it is emphasized that the training phase 51 and the predicting phase 52 can be executed separately, independently from one another. For instance, the training phase 51 and the predicting phase 52 can be executed by separate systems, i.e. one training system that performs only the training phase 51, and at least one predicting system that performs only the predicting phase 52 by using the optimal set of parameters computed by and received from the training system.

## REFERENCES

[Huang+2018] Z. Huang, P. Xie, V. Miegebielle: "Deep learning approach for automatic detection of oil slick", First EAGE/PESGB Workshop on Machine Learning, 29-30 November 2018, London, UK

**Claims**

1. Computer implemented method (10) for detecting an oil slick in a target image acquired by a spaceborne or airborne radar, wherein said method comprises:

   - a phase (T1) of training a convolutional network using a set of training images, the set of training images comprising training images without oil slicks and training images with oil slicks,
   - a phase (T2) of predicting the presence or absence of an oil slick on the target image by applying the convolutional network on said target image,
   wherein the phase (T1) of training of the convolutional network uses a loss function which combines a weighted-cross-entropy loss function and a Jaccard loss function,
   wherein the convolutional network comprises an encoder, and using the convolutional network comprises applying an encoding step (20) comprising successive convolutional layer steps (21, 21', 21", 21''') and downsampling layer steps (22, 22', 22", 22'''), wherein each convolutional layer step comprises at least one convolution step (211, 213, 211', 213', 211", 213", 211''', 213''') and at least one activation step (212, 214, 212', 214', 212", 214", 212''', 214'''),
   wherein each activation step (212, 214, 212', 214', 212", 214", 212''', 214''') of a convolutional layer step of the encoding step (20) uses a leaky rectified linear unit which applies an activation function $f(x)$ expressed as:

$$f(x) = \begin{cases} x & \text{if } x > 0 \\ \alpha x & \text{otherwise} \end{cases}$$

   wherein $\alpha$ is a predetermined positive weighting factor, the value of which is lower than or equal to 0.001.

2. Method (10) according to claim 1, wherein the weighting factor $\alpha$ is in the interval [0.0001, 0.0005].

3. Method (10) according to claim 1 or 2, wherein at least a portion of the training images which do not comprise oil slicks are look-alike training images, a look-alike training image being a training image for which the values of the pixels satisfy one or more predetermined oil slick resemblance criteria.

4. Method (10) according to claim 3, wherein at least one predetermined oil slick resemblance criterion is satisfied by a training image if at least one of the following is true:

   - number of dark pixels in the training image is above a predetermined first threshold value,
   - number of dark pixels in the training image is below a predetermined second threshold value,
   - variance of the values of the pixels in the training image is above a predetermined third threshold value,
   - distance with the pixels of at least one training image comprising an oil slick is below a predetermined fourth threshold value.

5. Method (10) according to any one of claims 1 to 4, wherein, the convolutional network being a fully convolutional network comprising the encoder and a decoder, using the convolutional network comprises applying a decoding step (30) comprising successive convolutional layer steps (31, 31', 31", 31''') and upsampling layer steps (32, 32', 32", 32'''), wherein each convolutional layer step comprises at least one convolution step (311, 313, 311', 313', 311", 313", 311 ''', 313''') and at least one activation step (312, 314, 312', 314', 312", 314", 312''', 314''') using an activation function, wherein the output of each upsampling layer step is concatenated with the output of the convolutional layer step of the encoding step having the same spatial resolution, the concatenated output being provided as input to the following convolutional layer step of the decoding step.

6. Method (10) according to claim 5, wherein each activation step (312, 314, 312', 314', 312", 314", 312''', 314''') of a convolutional layer step of the decoding step (30) uses a leaky rectified linear unit.

7. Method (10) according to claim 5 or 6, wherein the decoding step (30) comprises a final convolutional layer step comprising a 1x1 convolution step (335) followed by an activation step (336) using a sigmoid function.

8. Method (10) according to claim 6, wherein the leaky rectified linear unit of each activation step (312, 314, 312', 314', 312", 314", 312''', 314''') of a convolutional layer step of the decoding step (30) applies an activation function f'(x) expressed as:

$$f'(x) = \begin{cases} x & \text{if } x > 0 \\ \alpha'x & \text{otherwise} \end{cases}$$

wherein $\alpha'$ is a predetermined positive weighting factor, the value of which is lower than or equal to 0.001.

9. Method (10) according to claim 8, wherein the weighting factor $\alpha'$ is in the interval [0.0001, 0.0005].

10. Method (10) according to any one of claims 1 to 9, wherein the loss function includes a L2 regularization.

11. Method (10) according to any one of claims 1 to 10, wherein the training images with oil slicks comprise training images with oil seeps and training images with oil spills, and wherein the phase (T2) of predicting the presence or absence of an oil slick on the target image comprises, when the presence of an oil slick is detected, predicting whether the detected oil slick is an oil seep or an oil spill.

12. Method (10) according to any one of claims 1 to 11, wherein the loss function used during the phase of training uses a differentiable version of the Jaccard loss function, referred to as soft Jaccard loss function.

13. Computer program product comprising code instructions which, when executed by a processor, cause said processor to carry out a method as claimed in any one of claims 1 to 12.

14. System (50) for detecting an oil slick in a target image acquired by a spaceborne or an airborne radar, wherein said system comprises a processing circuit configured to carry out an oil slick detection method (10) as claimed in any one of claims 1 to 12.


**Patentansprüche**

1. Computerimplementiertes Verfahren (10) zum Detektieren eines Ölteppichs in einem Zielbild, welches durch einen weltraumgestützten oder einen luftgestützten Radar aufgenommen wird, wobei das Verfahren umfasst:

   - eine Phase (T1) eines Trainierens eines konvolutionalen Netzwerks unter Verwendung eines Satzes von Trainingsbildern, wobei der Satz von Trainingsbildern Trainingsbilder ohne Ölteppiche und Trainingsbilder mit Ölteppichen umfasst,
   - eine Phase (T2) eines Vorhersagens des Vorhandenseins oder des Nichtvorhandenseins eines Ölteppichs auf dem Zielbild durch Anwenden des konvolutionalen Netzwerks auf das Zielbild,
   wobei die Phase (T1) eines Trainierens des konvolutionalen Netzwerks eine Verlustfunktion verwendet, welche eine gewichtete Kreuzentropie-Verlustfunktion und eine Jaccard-Verlustfunktion kombiniert,
   wobei das konvolutionale Netzwerk einen Kodierer umfasst und ein Verwenden des konvolutionalen Netzwerks ein Anwenden eines Kodierschrittes (20) umfasst, umfassend aufeinanderfolgende Konvolutional-Ebene-Schritte (21, 21', 21", 21''') und Downsampling-Ebene Schritte (22, 22', 22", 22'''), wobei jeder Konvolutional-Ebene-Schritt wenigstens einen Konvolutional-Schritt (211, 213, 211', 213', 211", 213", 211''', 213''') und wenigstens einen Aktivierungsschritt (212, 214, 212', 214', 212", 214", 212''', 214''') umfasst,
   wobei jeder Aktivierungsschritt (212, 214, 212' 214', 212", 214", 212''', 214''') eines Konvolutional-Ebene-Schrittes des Kodierschrittes (20) eine durchlässige Rectified-Linear-Unit verwendet, welche eine Aktivierungsfunktion $f(x)$ verwendet, ausgedrückt als:

$$f(x) = \begin{cases} x & \text{wenn } x > 0 \\ \alpha x & \text{andernfalls} \end{cases}$$

   wobei $\alpha$ ein vorbestimmter positiver Gewichtungsfaktor ist, dessen Wert kleiner oder gleich 0,001 ist.

2. Verfahren (10) nach Anspruch 1, wobei der Gewichtungsfaktor $\alpha$ in dem Intervall [0,0001, 0,0005] liegt.

3. Verfahren (10) nach Anspruch 1 oder 2, wobei wenigstens ein Teil der Trainingsbilder, welche keine Ölteppiche umfassen, Ähnlichkeits-Trainingsbilder sind, wobei ein Ähnlichkeits-Trainingsbild ein Trainingsbild ist, für welches die Werte der Pixel ein oder mehrere vorbestimmte Ölteppich-Ähnlichkeitskriterien erfüllen.

**4.** Verfahren (10) nach Anspruch 3, wobei wenigstens ein vorbestimmtes Ölteppich-Ähnlichkeitskriterium durch ein Trainingsbild erfüllt ist, wenn wenigstens eines der Folgenden wahr ist:

- eine Anzahl von dunklen Pixeln in dem Trainingsbild ist oberhalb eines vorbestimmten ersten Schwellenwerts,
- eine Anzahl von dunklen Pixeln in dem Trainingsbild ist unterhalb eines vorbestimmten zweiten Schwellenwerts,
- eine Varianz der Werte der Pixel in dem Trainingsbild ist oberhalb eines vorbestimmten dritten Schwellenwerts,
- eine Distanz zu den Pixeln wenigstens eines Trainingsbilds, welches einen Ölteppich umfasst, ist unterhalb eines vorbestimmten vierten Schwellenwerts.

**5.** Verfahren (10) nach einem der Ansprüche 1 bis 4, wobei das konvolutionale Netzwerk ein vollständiges konvolutionales Netzwerk ist, welches den Kodierer und einen Dekodierer umfasst, das Verwenden des konvolutionalen Netzwerks ein Anwenden eines Dekodierschrittes (30) umfasst, umfassend aufeinanderfolgende Konvolutional-Ebene-Schritte (31, 31', 31", 31''') und Upsampling-Ebene-Schritte (32, 32', 32", 32'''), wobei jeder Konvolutional-Ebene-Schritt wenigstens einen Konvolutional-Schritt (311, 313, 311', 313', 311", 313", 311''', 313''') und wenigstens einen Aktivierungsschritt (312, 314, 312', 314', 312", 314", 312''', 314''') unter Verwendung einer Aktivierungsfunktion umfasst, wobei die Ausgabe jedes Upsampling-Ebene-Schritts mit der Ausgabe des Konvolutional-Ebene-Schrittes des Kodierschrittes verkettet wird, welche die gleiche räumliche Auflösung aufweist, wobei die verkettete Ausgabe als eine Eingabe für den folgenden Konvolutional-Ebene-Schritt des Dekodierschrittes bereitgestellt wird.

**6.** Verfahren (10) nach Anspruch 5, wobei jeder Aktivierungsschritt (312, 314, 312', 314', 312", 314", 312''', 314''') eines Konvolutional-Ebene-Schritt des Dekodierschrittes (30) eine durchlässige Rectified-Linear-Unit verwendet.

**7.** Verfahren (10) nach Anspruch 5 oder 6, wobei der Dekodierschritt (30) einen finalen Konvolutional-Ebene-Schritt umfasst, welcher einen 1x1- Konvolutional-Schritt (335) gefolgt von einem Aktivierungsschritt (336) unter Verwendung einer Sigmoidal-Funktion umfasst.

**8.** Verfahren (10) nach Anspruch 6, wobei die durchlässige Rectified-Linear-Unit jedes Aktivierungsschritts (312, 314, 312', 314', 312", 314", 312''', 314''') eines Konvolutional-Ebene-Schrittes des Dekodierschrittes (30) eine Aktivierungsfunktion f'(x) verwendet, ausgedrückt als:

$$f'(x) = \left\{ \begin{array}{ll} x & \text{wenn } x > 0 \\ \alpha'x & \text{andernfalls} \end{array} \right.$$

wobei a' ein vorbestimmter positiver Gewichtungsfaktor ist, dessen Wert kleiner oder gleich 0,001 ist.

**9.** Verfahren (10) nach Anspruch 8, wobei der Gewichtungsfaktor a' in dem Intervall [0,0001, 0,0005] liegt.

**10.** Verfahren (10) nach einem der Ansprüche 1 bis 9, wobei die Verlustfunktion eine L2-Regularisation umfasst.

**11.** Verfahren (10) nach einem der Ansprüche 1 bis 10, wobei die Trainingsbilder mit Ölteppichen Trainingsbilder mit Ölaustritten und Trainingsbilder mit Ölverschmutzungen umfassen, und wobei die Phase (T2) eines Vorhersagens des Vorhandenseins oder Nichtvorhandenseins eines Ölteppichs auf dem Zielbild ein Vorhersagen umfasst, ob der detektierte Ölteppich ein Ölaustritt oder eine Ölverschmutzung ist, wenn das Vorhandensein eines Ölteppichs detektiert wird.

**12.** Verfahren (10) nach einem der Ansprüche 1 bis 11, wobei die Verlustfunktion, welche während der Phase des Trainings verwendet wird, eine differenzierbare Version der Jaccard-Verlustfunktion verwendet, bezeichnet als weiche Jaccard-Verlustfunktion.

**13.** Computerprogammprodukt, umfassend Code-Anweisungen, welche, wenn sie durch einen Prozessor ausgeführt werden, den Prozessor dazu veranlassen, ein Verfahren nach einem der Ansprüche 1 bis 12 auszuführen.

**14.** System (50) zum Detektieren eines Ölteppichs in einem Zielbild, welches durch einen weltraumgestützten oder einen luftgestützten Radar aufgenommen wird, wobei das System eine Verarbeitungsschaltung umfasst, welche dazu eingerichtet ist, ein Ölteppich-Detektionsverfahren (10) wie in einem der Ansprüche 1 bis 12 beansprucht auszuführen.

**Revendications**

1.  Procédé (10) mis en oeuvre par ordinateur pour détecter une nappe de pétrole dans une image cible acquise par un radar spatioporté ou aéroporté, dans lequel ledit procédé comprend :

    - une phase (T1) d'apprentissage d'un réseau convolutif en utilisant un ensemble d'images d'apprentissage, l'ensemble d'images d'apprentissage comprenant des images d'apprentissage sans nappes de pétrole et des images d'apprentissage avec des nappes de pétrole,
    - une phase (T2) de prédiction de la présence ou de l'absence d'une nappe de pétrole sur l'image cible en appliquant le réseau convolutif sur ladite image cible,
    dans lequel la phase (T1) d'apprentissage du réseau convolutif utilise une fonction de perte qui combine une fonction de perte d'entropie croisée pondérée et une fonction de perte de Jaccard,
    dans lequel le réseau convolutif comprend un codeur, et l'utilisation du réseau convolutif comprend l'application d'une étape de codage (20) comprenant des étapes de couches convolutives successives (21, 21', 21", 21''') et des étapes de couches de sous-échantillonnage (22, 22', 22", 22'''), dans lequel chaque étape de couche convolutive comprend au moins une étape de convolution (211, 213, 211', 213', 211", 213", 211''', 213''') et au moins une étape d'activation (212, 214, 212', 214', 212", 214", 212''', 214'''),
    dans lequel chaque étape d'activation (212, 214, 212', 214', 212", 214", 212''', 214''') d'une étape de couche convolutive de l'étape de codage (20) utilise une unité linéaire rectifiée à fuite qui applique une fonction d'activation f(x) exprimée comme :

    $$f(x) = \begin{cases} x \ si \ x > 0 \\ \alpha x \ sinon \end{cases}$$

    dans laquelle $\alpha$ est un facteur de pondération positif prédéterminé, dont la valeur est inférieure ou égale à 0,001.

2.  Procédé (10) selon la revendication 1, dans lequel le facteur de pondération $\alpha$ est dans l'intervalle [0,0001, 0,0005].

3.  Procédé (10) selon la revendication 1 ou 2, dans lequel au moins une partie des images d'apprentissage qui ne comprennent pas de nappes de pétrole sont des images d'apprentissage approchantes, une image d'apprentissage approchante étant une image d'apprentissage pour laquelle les valeurs des pixels satisfont à un ou plusieurs critères de ressemblance de nappe de pétrole prédéterminés.

4.  Procédé (10) selon la revendication 3, dans lequel au moins un critère de ressemblance de nappe de pétrole prédéterminé est satisfait par une image d'apprentissage si au moins un parmi ce qui suit est vrai :

    - le nombre de pixels sombres dans l'image d'apprentissage est au-dessus d'une première valeur de seuil prédéterminée,
    - le nombre de pixels sombres dans l'image d'apprentissage est au-dessous d'une deuxième valeur de seuil prédéterminée,
    - la variance des valeurs des pixels dans l'image d'apprentissage est au-dessus d'une troisième valeur de seuil prédéterminée,
    - la distance avec les pixels d'au moins une image d'apprentissage comprenant une nappe de pétrole est au-dessous d'une quatrième valeur de seuil prédéterminée.

5.  Procédé (10) selon l'une quelconque des revendications 1 à 4, dans lequel, le réseau convolutif étant un réseau entièrement convolutif comprenant le codeur et un décodeur, l'utilisation du réseau convolutif comprend l'application d'une étape de décodage (30) comprenant des étapes de couches convolutives successives (31, 31', 31", 31''') et des étapes de couches de suréchantillonnage (32, 32', 32", 32'''), dans lequel chaque étape de couche convolutive comprend au moins une étape de convolution (311, 313, 311', 313', 311", 313", 311''', 313''') et au moins une étape d'activation (312, 314, 312', 314', 312", 314", 312''', 314''') utilisant une fonction d'activation, dans lequel la sortie de chaque étape de couche de suréchantillonnage est concaténée avec la sortie de l'étape de couche convolutive de l'étape de codage ayant la même résolution spatiale, la sortie concaténée étant fournie comme entrée à l'étape de couche convolutive suivante de l'étape de décodage.

6.  Procédé (10) selon la revendication 5, dans lequel chaque étape d'activation (312, 314, 312', 314', 312", 314", 312''', 314''') d'une étape de couche convolutive de l'étape de décodage (30) utilise une unité linéaire rectifiée à fuite.

**7.** Procédé (10) selon la revendication 5 ou 6, dans lequel l'étape de décodage (30) comprend une étape de couche convolutive finale comprenant une étape de convolution $1 \times 1$ (335) suivie d'une étape d'activation (336) utilisant une fonction sigmoïde.

**8.** Procédé (10) selon la revendication 6, dans lequel l'unité linéaire rectifiée à fuite de chaque étape d'activation (312, 314, 312', 314', 312", 314", 312‴, 314‴) d'une étape de couche convolutive de l'étape de codage (30) applique une fonction d'activation f'(x) exprimée comme :

$$f'(x) = \begin{cases} x \; si \; x > 0 \\ \alpha'x \; sinon \end{cases}$$

dans laquelle $\alpha'$ est un facteur de pondération positif prédéterminé, dont la valeur est inférieure ou égale à 0,001.

**9.** Procédé (10) selon la revendication 8, dans lequel le facteur de pondération $\alpha'$ est dans l'intervalle [0,0001, 0,0005].

**10.** Procédé (10) selon l'une quelconque des revendications 1 à 9, dans lequel la fonction de perte comporte une régularisation L2.

**11.** Procédé (10) selon l'une quelconque des revendications 1 à 10, dans lequel les images d'apprentissage avec des nappes de pétrole comprennent des images d'apprentissage avec des suintements de pétrole et des images d'apprentissage avec des déversements de pétrole, et dans lequel la phase (T2) de prédiction de la présence ou de l'absence d'une nappe de pétrole sur l'image cible comprend, lorsque la présence d'une nappe de pétrole est détectée, le fait de prédire si la nappe de pétrole détectée est un suintement de pétrole ou un déversement de pétrole.

**12.** Procédé (10) selon l'une quelconque des revendications 1 à 11, dans lequel la fonction de perte utilisée durant la phase d'apprentissage utilise une version dérivable de la fonction de perte de Jaccard, appelée fonction de perte de Jaccard non stricte.

**13.** Produit programme d'ordinateur comprenant des instructions de code qui, lorsqu'elles sont exécutées par un processeur, amènent ledit processeur à réaliser un procédé selon l'une quelconque des revendications 1 à 12.

**14.** Système (50) pour détecter une nappe de pétrole dans une image cible acquise par un radar spatioporté ou aéroporté, dans lequel ledit système comprend un circuit de traitement configuré pour réaliser un procédé (10) de détection de nappe de pétrole selon l'une quelconque des revendications 1 à 12.

Training
images → Training phase

⌐10

└T1

Target
image → Predicting
phase

└T2

↓

Prediction

**Fig. 1**

60

50

52   51   53

**Fig. 3**

Image dimensions:
(1) = 256x256x1
(2) = 256x256x64
(3) = 128x128x64
(4) = 128x128x128
(5) = 64x64x128
(6) = 64x64x256
(7) = 32x32x256
(8) = 32x32x512
(9) = 16x16x512
(10) = 16x16x1024
(11) = 32x32x1024
(12) = 64x64x512
(13) = 128x128x256
(14) = 256x256x128

Fig. 2

EP 4 094 090 B1

18

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **Z. HUANG ; P. XIE ; V. MIEGEBIELLE.** Deep learning approach for automatic detection of oil slick. *First EAGE/PESGB Workshop on Machine Learning,* 29 November 2018